# EUROPEAN PATENT APPLICATION

(11) **EP 3 447 621 A1**
(43) Date of publication of application: **27.02.2019**
(21) Application number: 18190188.5
(22) Date of filing: 22.08.2018
(51) Int. Cl.: G06F 3/0481

(54) **ELECTRONIC DEVICE AND METHOD FOR OPERATING APPLICATIONS**

(30) Priority: 22.08.2017 KR 20170106350
(71) Applicant: Samsung Electronics Co., Ltd., Gyeonggi-do 16677 (KR)
(72) Inventor: KANG, Ji Kwang, 16543 Gyeonggi-do (KR); KANG, Dong Hoon, 17064, Gyeonggi-do (KR); MIN, Byung Woo, 13611 Gyeonggi-do (KR); YOO, Jae Min, 03301 Seoul (KR); KIM, Kyu Hong, 16931 Gyeonggi-do (KR); BAEK, Jong Wu, 39447 Gyeongsangbuk-do (KR)
(74) Representative: HGF Limited

(57) **Abstract**

An electronic device is provided. The electronic device includes a display, a processor, and a memory storing a first application program including a first user interface and a second application program including a second user interface. The memory stores instructions that, when executed, cause the processor to display an array of icons in an area adjacent to the edge in response to the gesture input, wherein each of the icons has a first size, one of the icons includes a first icon and a second icon, the first icon and second icon having a second size smaller than the first size, the first icon indicates the first application program, and the second icon indicates the second application program, receive an input to select the one of the icons, and display the first user interface and the second user interface together on the display in response to the received input.

## Description

### PRIORITY

This application is based on and claims priority to Korean Patent Application Serial No. 10-2017-0106350, filed on August 22, 2017, in the Korean Intellectual Property Office, the entire disclosure of which is incorporated herein by reference.

### BACKGROUND OF THE INVENTION

### 1. Field of the Invention

The present disclosure relates generally to an electronic device and a method, and more particularly, to an electronic device and method for operating a plurality of applications.

### 2. Background of the Invention

An electronic device such as a smartphone, a tablet personal computer (PC), or the like may perform various functions by using applications, such as video playback, SNS, message transmission, account transfer, Internet search, or shopping, through the applications.

In recent years, as the size of a display has increased and the performance of a processor has improved, it is possible to perform a multitasking operation (or multi-window operation). The electronic device may launch a plurality of applications together.

A user needs to execute applications sequentially and needs to adjust execution environment (e.g., window size) repeatedly whenever executing the applications, such that an electronic device operates in a multi-window scheme.

The above information is presented as background information only to assist with an understanding of the present disclosure. No determination has been made, and no assertion is made, as to whether any of the above might be applicable as prior art with regard to the present disclosure.

### SUMMARY OF THE INVENTION

Aspects of the present disclosure are to address at least the above-mentioned problems and/or disadvantages and to provide at least the advantages described below.

The present disclosure has been made to address at least the disadvantages described above and to provide at least the advantages described below.

Accordingly, an aspect of the present disclosure is to provide an electronic device that allows a plurality of applications to be executed through one icon.

In accordance with an aspect of the present disclosure, an electronic device is provided. The electronic device includes a display, a communication circuit, a processor electrically connected to the display and the communication circuit, and a memory electrically connected to the processor. The memory is configured to store a first application program including a first user interface and a second application program including a second user interface. The memory further stores instructions that, when executed, cause the processor to receive a gesture input moving toward a center of the display from an edge of the display, display an array of icons in an area adjacent to the edge in response to the gesture input, wherein each of the icons has a first size, one of the icons includes a first icon and a second icon, the first icon and second icon having a second size smaller than the first size, the first icon indicates the first application program, and the second icon indicates the second application program, receive an input to select the one of the icons, and display the first user interface and the second user interface together on the display in response to the received input

In accordance with an aspect of the present disclosure, an electronic device is provided. The electronic device includes a display, a memory, and a processor. The processor is configured to output a user interface for creating a shortcut icon for launching a plurality of applications in a multi-window scheme. The user interface includes a preview area and an application selection area.

In accordance with an aspect of the present disclosure, an application executing method is provided. The application executing method is performed by an electronic device and includes receiving a user input in a specified scheme to a first icon associated with execution of a first application, outputting a user interface for creating a shortcut icon that executes a plurality of applications including the first application in a multi-window scheme, and creating the shortcut icon.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a diagram of an electronic device supporting multi-window, according to an embodiment;
FIGs. 2A and 2B are flowcharts of a method of creating a multi-icon, according to an embodiment;
FIGs. 3A and 3B are diagrams of screen views for creating a multi-icon, according to an embodiment;
FIG. 4 is a diagram of a setting UI for creating a multi-icon, according to an embodiment;
FIG. 5 is a diagram of a screen for recommending an application in a setting UI, according to an embodiment;
FIG. 6 is a diagram of a screen of a setting UI including a layout option, according to an embodiment;
FIG. 7A is a diagram of a screen indicating creation of a multi-icon using a multi-touch, according to an embodiment;
FIG. 7B is a diagram of a screen indicating creation of a multi-icon through movement of an icon, according to an embodiment;
FIG. 8 is a diagram of a screen indicating creation of a multi-icon in a multi-window output, according to an embodiment;
FIG. 9 is a flowchart for executing an application according to an attribute of an icon, according to an embodiment;
FIG. 10 is a diagram of an execution method of a multi-icon, according to an embodiment;
FIG. 11 is a diagram of a program module executing a multi-icon, according to an embodiment;
FIG. 12 is a diagram of execution of a multi-window in a portrait mode, according to an embodiment;
FIG. 13 is a diagram of execution of a multi-window in a landscape mode, according to an embodiment;
FIG. 14 is a diagram of a change in a layout during a multi-window operation, according to an embodiment; and
FIG. 15 is a diagram of an electronic device in a network environment, according to an embodiment.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

Embodiments of the disclosure will be described herein below with reference to the accompanying drawings. However, the embodiments of the disclosure are not limited to the specific embodiments and should be construed as including all modifications, changes, equivalent devices and methods, and/or alternative embodiments of the present disclosure. In the description of the drawings, similar reference numerals are used for similar elements.

The terms "have," "may have," "include," and "may include" as used herein indicate the presence of corresponding features (for example, elements such as numerical values, functions, operations, or parts), and do not preclude the presence of additional features.

The terms "A or B," "at least one of A or/and B," or "one or more of A or/and B" as used herein include all possible combinations of items enumerated with them. For example, "A or B," "at least one of A and B," or "at least one of A or B" means (1) including at least one A, (2) including at least one B, or (3) including both at least one A and at least one B.

The terms such as "first" and "second" as used herein may use corresponding components regardless of importance or an order and are used to distinguish a component from another without limiting the components. These terms may be used for the purpose of distinguishing one element from another element. For example, a first user device and a second user device indicates different user devices regardless of the order or importance. For example, a first element may be referred to as a second element without departing from the scope the disclosure, and similarly, a second element may be referred to as a first element.

It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. To the contrary, it will be understood that, when an element (for example, a first element) is "directly coupled with/to" or "directly connected to" another element (for example, a second element), there is no intervening element (for example, a third element) between the element and another element.

The expression "configured to (or set to)" as used herein may be used interchangeably with "suitable for," "having the capacity to," "designed to," " adapted to," "made to," or "capable of' according to a context. The term "configured to (set to)" does not necessarily mean "specifically designed to" in a hardware level. Instead, the expression "apparatus configured to..." may mean that the apparatus is "capable of..." along with other devices or parts in a certain context. For example, "a processor configured to (set to) perform A, B, and C" may mean a dedicated processor (e.g., an embedded processor) for performing a corresponding operation, or a generic-purpose processor (e.g., a central processing unit (CPU) or an application processor (AP)) capable of performing a corresponding operation by executing one or more software programs stored in a memory device.

The terms used in describing the various embodiments of the disclosure are for the purpose of describing particular embodiments and are not intended to limit the disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. Terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the disclosure.

The term "module" as used herein may, for example, mean a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module" may be a minimum unit for performing one or more functions or a part thereof. The "module" may be mechanically or electronically implemented. For example, the "module" according to the disclosure may include at least one of an application-specific integrated circuit (ASIC) chip, a field-programmable gate array (FPGA), and a programmable-logic device for performing operations which has been known or are to be developed hereinafter.

An electronic device according to the disclosure may include at least one of, for example, a smart phone, a tablet personal computer (PC), a mobile phone, a video phone, an electronic book reader (e-book reader), a desktop PC, a laptop PC, a netbook computer, a workstation, a server, a personal digital assistant (PDA), a portable multimedia player (PMP), a MPEG-1 audio layer-3 (MP3) player, a mobile medical device, a camera, and a wearable device. The wearable device may include at least one of an accessory type (e.g., a watch, a ring, a bracelet, an anklet, a necklace, a glasses, a contact lens, or a head-mounted device (HMD)), a fabric or clothing integrated type (e.g., an electronic clothing), a body-mounted type (e.g., a skin pad, or tattoo), and a bio-implantable type (e.g., an implantable circuit).

The electronic device may be a home appliance. The home appliance may include at least one of, for example, a television, a digital video disk (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSync™, Apple TV™, or Google TV™), a game console (e.g., Xbox™ and PlayStation™), an electronic dictionary, an electronic key, a camcorder, and an electronic photo frame.

The electronic device may include at least one of various medical devices (e.g., various portable medical measuring devices (a blood glucose monitoring device, a heart rate monitoring device, a blood pressure measuring device, a body temperature measuring device, etc.), a magnetic resonance angiography (MRA), a magnetic resonance imaging (MRI), a computed tomography (CT) machine, and an ultrasonic machine), a navigation device, a global positioning system (GPS) receiver, an event data recorder (EDR), a flight data recorder (FDR), a vehicle infotainment device, an electronic device for a ship (e.g., a navigation device for a ship, and a gyrocompass), avionics, security devices, an automotive head unit, a robot for home or industry, an automatic teller machine (ATM) in banks, point of sales (POS) devices in a shop, or an Internet of things (IoT) device (e.g., a light bulb, various sensors, electric or gas meter, a sprinkler device, a fire alarm, a thermostat, a streetlamp, a toaster, a sporting goods, a hot water tank, a heater, a boiler, etc.).

The electronic device may include at least one of a part of furniture or a building/structure, an electronic board, an electronic signature receiving device, a projector, and various kinds of measuring instruments (e.g., a water meter, an electric meter, a gas meter, and a radio wave meter). The electronic device may be a combination of one or more of the aforementioned various devices. The electronic device may also be a flexible device. Further, the electronic device is not limited to the aforementioned devices, and may include an electronic device according to the development of new technology.

Hereinafter, an electronic device will be described with reference to the accompanying drawings. In the disclosure, the term "user" indicates a person using an electronic device or a device (e.g., an artificial intelligence electronic device) using an electronic device.

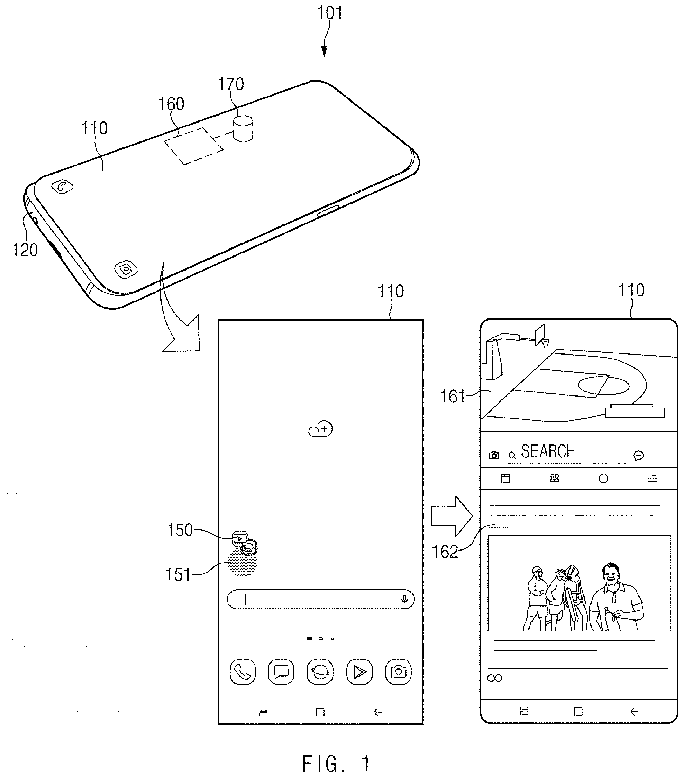

FIG. 1 is a diagram of an electronic device supporting multi-window, according to an embodiment. FIG. 1 shows two applications being executed in the multi-window scheme. However, embodiments of the present disclosure may not be limited thereto.

Referring to FIG. 1, an electronic device 101 may include a display 110 and a housing (or body) 120.

The display 110 may include a liquid crystal display (LCD), a light-emitting diode (LED) display, an organic LED (OLED) display, a microelectromechanical systems (MEMS) display, or an electronic paper display. The display 110 may display various contents (e.g., a text, an image, a video, an icon, and/or a symbol). The display 110 may include a touch screen and may receive a touch, gesture, proximity, or hovering input using an electronic pen or a part of a user's body.

The display 110 may display an icon for executing an application program (referred to as an application) running in the electronic device 101. When a user creates a touch input to the icon, the related application may be executed.

The housing 120 may mount the display 110 and a peripheral configuration (e.g., a physical button, a camera, or the like) on the outside. The housing 120 may include a processor 160, a memory 170, a communication circuit (not illustrated), a sensor module, a circuit board, a battery, or the like, which drives the electronic device 101, in the housing 120.

The processor 160 may display an icon (referred to as a multi-icon) 150, which allows a plurality of applications to be executed in a multi-window scheme together (or in parallel), on the display 110. When the user creates a user input 151 to the multi-icon 150, the processor 160 may launch a plurality of applications associated with the multi-icon 150 in the multi-window scheme together.

When the user input 151 is generated in the multi-icon 150 in which a first application 161 (e.g., YouTube™ application) and a second application 162 (e.g., social networking service (SNS) application) are associated with each other, the first application 161 and the second application 162 may be launched in the multi-window form.

The multi-icon 150 may be the form in which the icon of the first application 161 overlaps with the icon of the second application 162. The multi-icon 150 may be the form in which the icon of the second application 162 covers a part of the icon of the first application 161. The first application 161 may be disposed at the upper end of the display 110 and the second application 162 may be disposed at the lower end of the display 110.

In response to one user input, the electronic device 101 may perform a plurality of applications through the multi-icon 150 in the multi-window scheme. As shown in FIG. 1, two applications are executed in a portrait mode, but may alternatively be executed in landscape mode and other orientations.

When one user input 151 is generated in the multi-icon 150, the window size, execution state, or the like of the application being executed may be set depending on a user input or may be set to a default value. Additional information about the creation and execution of the multi-icon 150 as described below.

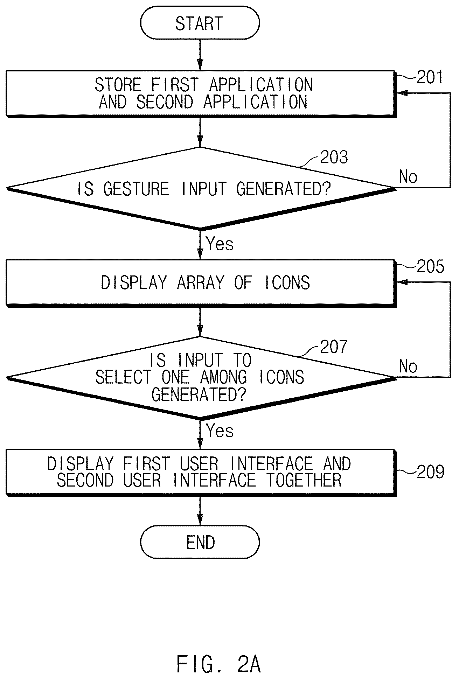

FIG. 2A is a flowchart of a method of creating a multi-icon, according to an embodiment.

Referring to FIG. 2A, at step 201, a processor in an electronic device may store a first application (or a first application program) and a second application (or a second application program) in a memory. The first application may include a first user interface, and the second application may include a second user interface.

At step 203, the processor may determine whether a gesture input moving from the edge of a display to the center of the display is generated. The gesture input may be a swipe input from the right side surface of the display to the center while the electronic device operates in the portrait mode.

At step 205, when a gesture input is generated, the processor may display an array of icons in an area adjacent to the edge, in response to the gesture input. In the array, each of icons may generally have a first size. One of icons of the array may include a first icon and a second icon, which have a second size smaller than the first size. The first icon may indicate the first application, and the second icon may indicate the second application.

At step 207, the processor may determine whether a touch input to select the one among icons of the array is generated.

At step 209, when the touch input is generated, the processor may display both the first user interface of the first application and the second user interface of the second application, on a display in response to the received touch input. When the electronic device operates in the portrait mode, the processor may arrange the first user interface and the second user interface in the vertical direction of the display.

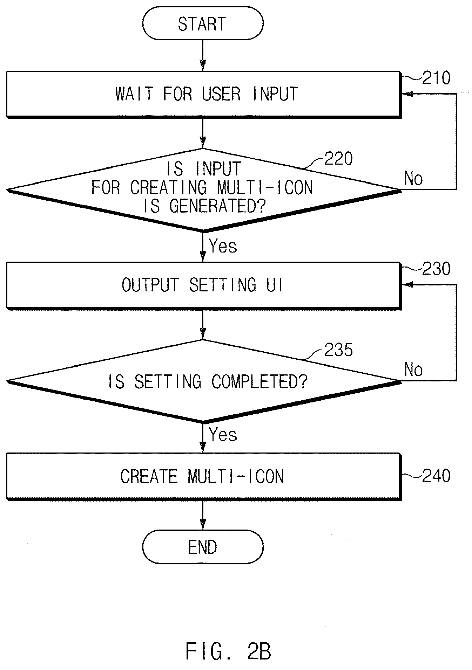

FIG. 2B is a flowchart of a method of creating a multi-icon, according to an embodiment.

Referring to FIG. 2B, at step 210, a processor inside an electronic device may be in a state of waiting for an input. The processor inside the electronic device 101 may be in a state in which power is supplied through an internal battery or an external device. When a user input (e.g., a button input, a touch input, a voice input, or the like) is generated, the processor inside the electronic device 101 may operate in response to a user input.

At step 220, the processor inside the electronic device 101 may determine whether an input for creating a multi-icon is generated.

The input for creating the multi-icon may be an input to select one of option buttons that output after an input (e.g., long touch, pressure touch, or the like) in a specified scheme is generated to an icon associated with one application.

The input for creating a multi-icon may be an input to select a button included in a setting menu, an edge pop-up menu, or the like.

The input for creating a multi-icon may be a multi-touch input for coupling a plurality of icons.

The input for creating a multi-icon may be an input to press a button for creating a multi-icon in a state where the electronic device 101 operates in a multi-window scheme.

When an input for creating a multi-icon is generated, at step 230, the processor may output a user interface (referred to as a setting UI) for setting the execution method of a multi-window. At least some fields of the setting UI may be recorded automatically.

At step 235, the processor may determine whether the setting associated with the execution method of the multi-window is completed, through the setting UI.

When the setting is completed, at step 240, the processor may create a multi-icon corresponding to a setting value. The created multi-icon may be in the form in which icons of a plurality of applications to be executed together in a multi-window scheme overlap with each other.

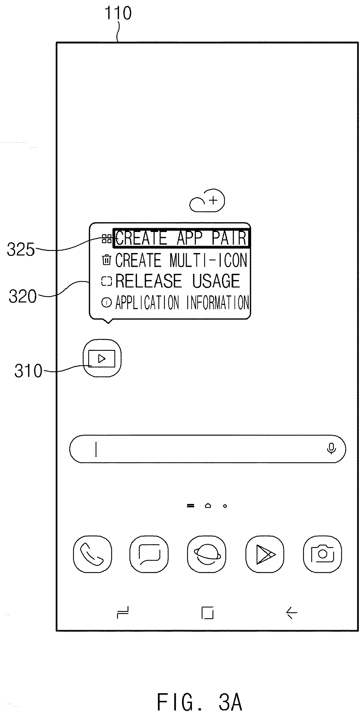

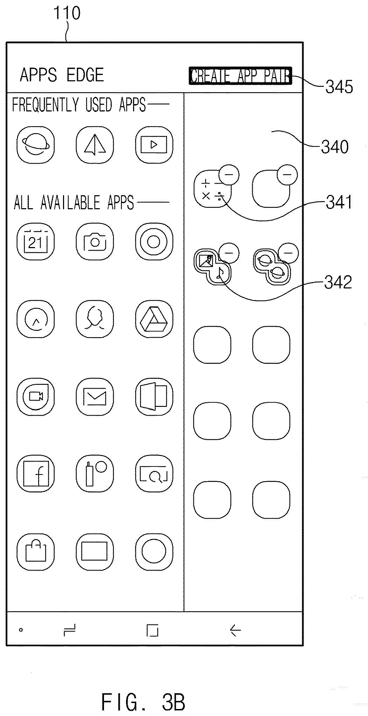

FIGs. 3A and 3B are diagrams of screen views for creating a multi-icon, according to an embodiment.

Referring to FIG. 3A, a processor of an electronic device may display an icon 310 associated with the execution of an application capable of being driven in the electronic device 101, on a display. The application associated with the icon 310 may support a multi-window.

When an input (e.g., a long-press input or 3D pressure input) in a specified scheme is generated to the icon 310, the processor may output a set option list 320. When the application associated with the icon 310 supports the multi-window, the option list 320 may display a multi-icon creation button 325.

When an input to select the multi-icon creation button 325 is generated, the processor may output a setting UI for creating the multi-icon.

Referring to FIG. 3B, when a specified input (e.g., a gesture input in a direction facing the center from the edge of the display 110) is generated, the processor of the electronic device may display a setting menu or an edge pop-up menu 340, in an area adjacent to the peripheral edge in which an input is generated. The setting menu or the edge pop-up menu 340 may include a multi-icon creation button 345.

When an input to select the multi-icon creation button 345 is generated, the processor may output a setting UI for creating the multi-icon.

The setting menu or the edge pop-up menu 340 may include the array of icons. The array may include a general application execution icon 341 having a first size, and a multi-application execution icon 342. The multi-application execution icon 342 may include a first icon and a second icon, which have a second size smaller than the first size. The first icon may indicate the first application program, and a second icon may indicate the second application program.

When a user launches the multi-application execution icon 342, the first application program and the second application program may be executed at the same time. When the multi-application execution icon 342 is executed, the first user interface of the first application program and the second user interface of the second application program may be displayed at the same size.

When the multi-application execution icon 342 is executed, the first user interface of the first application program and the second user interface of the second application program may contact with each other along a boundary extending to be perpendicular to the edge of the side of the display 110. When the display 110 is in the form of a rectangle with a first side having a first length and a second side having a second length greater than the first length, the edge of the side may be the at least part of the second side.

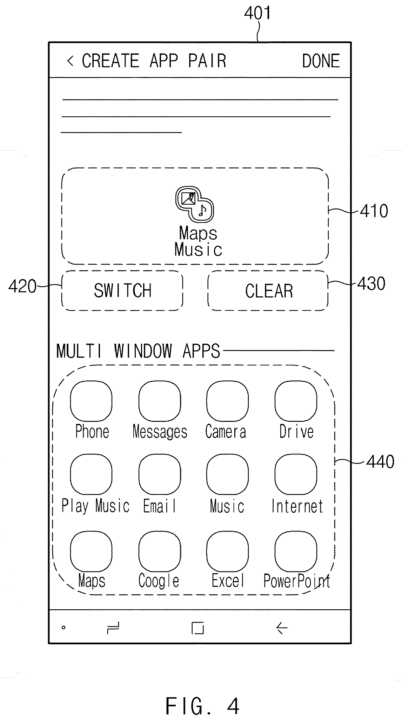

FIG. 4 is a diagram of a setting UI for creating a multi-icon, according to an embodiment.

Referring to FIG. 4, a setting UI 401 for creating a multi-icon may include a preview area 410, a switching button 420, a clear button 430, and an application selection area 440.

The preview area 410 may display the type of a multi-icon or the lay-out of multi-window, which is to be created, in the form of an image. When one or more icons are selected from the application selection area 440, an electronic device may update the type or the lay-out of an icon, in the preview area 410.

The switching button 420 may change the placement order of the applications selected by an input. When a user sequentially selects a first application and a second application in the application selection area 440, the layout in which the first application is disposed at the upper end of a display and the second application is disposed at the lower end of the display may be displayed in the preview area 410. When the user presses the switching button 420, the location of the first application and the location of the second application may be changed with respect to each other.

The clear button 430 may deselect an application selected by the user. The clear button 430 may deselect all of the applications selected by the user. The clear button 430 may deselect an application, which has been most recently selected, from among the applications selected by the user.

The application selection area 440 may include icons of applications executable in a multi-window scheme. The user may select one or more icons included in the application selection area 440. The icon selected in the application selection area 440 may be reflected to the preview area 410. When the first application and the second application are selected, the first icon of the first application and the second icon of the second application may be displayed in the preview area 410 in a state where both overlap with each other. In the preview area 410, the second icon of the second application may be in the form of covering the part of the first icon of the first application.

The processor may deactivate (or dim) on at least part of icons in the application selection area 440. The processor may dim at least part of icons among an icon of an application that does not supporting a multi-window, an icon of an application, which is selected and does not support a multi-window with respect to the same application, or an icon in which the multi-icon is created in the same form.

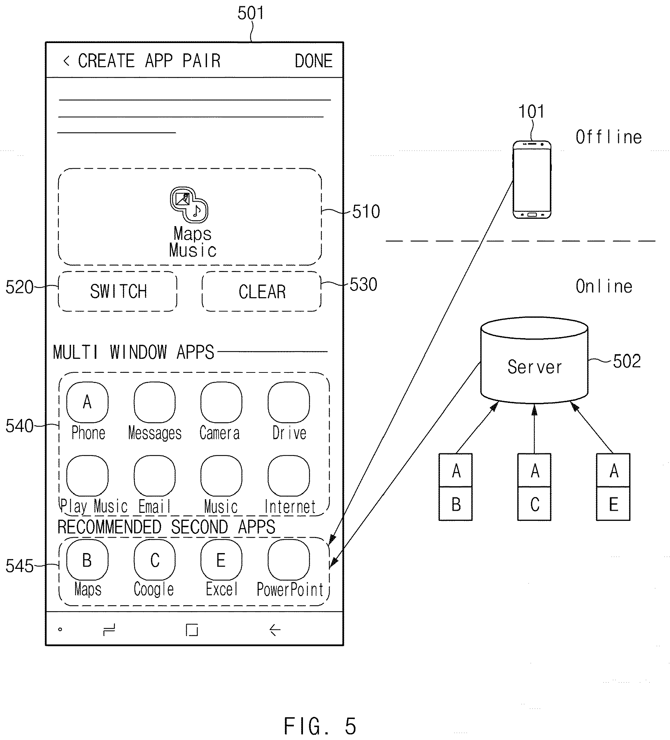

FIG. 5 is a diagram of a screen for recommending an application in a setting UI, according to an embodiment.

Referring to FIG. 5, a setting UI 501 for creating a multi-icon may include a preview area 510, a switching button 520, a clear button 530, an application selection area 540, and a recommendation area 545. The operations of the preview area 510, the switching button 520, the clear button 530, and the application selection area 540 may be the same as or similar to the operations of the preview area 410, the switching button 420, the clear button 430, and the application selection area 440 of FIG. 4.

The recommendation area 545 may recommend a selectable application to a user based on history information about the creation of a multi-icon stored in the internal memory of an electronic device 101 or recommendation information received from an external server 502. The recommendation area 545 may be updated based on information about link history of application programs stored in the memory or the link probability of application programs provided by the external device.

When a user has created a multi-icon, the processor of the electronic device 101 may store selection information of an application in the internal memory. The processor may update the recommendation area 545 based on the stored selection information of the electronic device 101. When the user selects the first application (e.g., application A), the processor may display applications, which have been executed together with the first application (e.g., application A) in a multi-window scheme, in the recommendation area 545 (e.g., application B, application C, and application E).

The external server 502 may collect and store information about the history of creating a multi-icon of a user utilizing the electronic device 101 or users utilizing other electronic devices or information about the history using an application in the multi-window scheme. When the user utilizing the electronic device 101 selects the first application, the external server 502 may provide the electronic device 101 with a list of applications having a high possibility that the applications are executed together with the first application in the multi-window scheme, based at least partly on the stored history. The processor may update the recommendation area 545 based on the application list received from the external server 502.

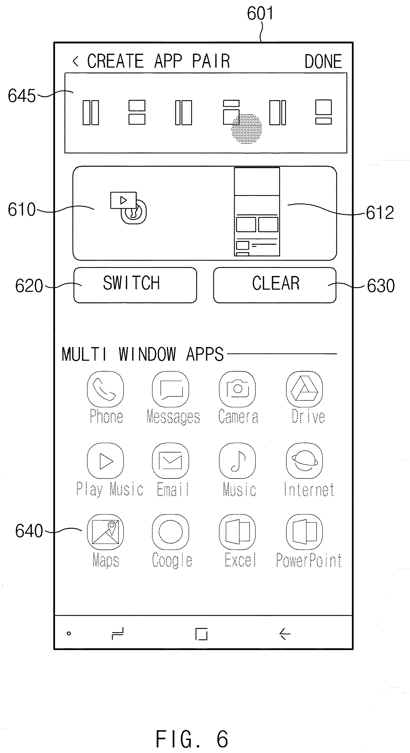

FIG. 6 is a diagram of a screen of a setting UI including a layout option, according to an embodiment.

Referring to FIG. 6, a setting UI 601 for creating a multi-icon may include a preview area 610, a switching button 620, a clear button 630, an application selection area 640, and a layout option 645. The operations of the preview area 610, the switching button 620, the clear button 630, and the application selection area 640 may be the same as or similar to the operations of the preview area 410, the switching button 420, the clear button 430, and the application selection area 440 of FIG. 4.

The layout option 645 may include various layout images in the case where the selected applications are executed in a multi-window scheme. When a user selects one of layout images included in the layout option 645, the processor may display an example image 612 of a multi-window in the preview area 610 in the form of the selected layout.

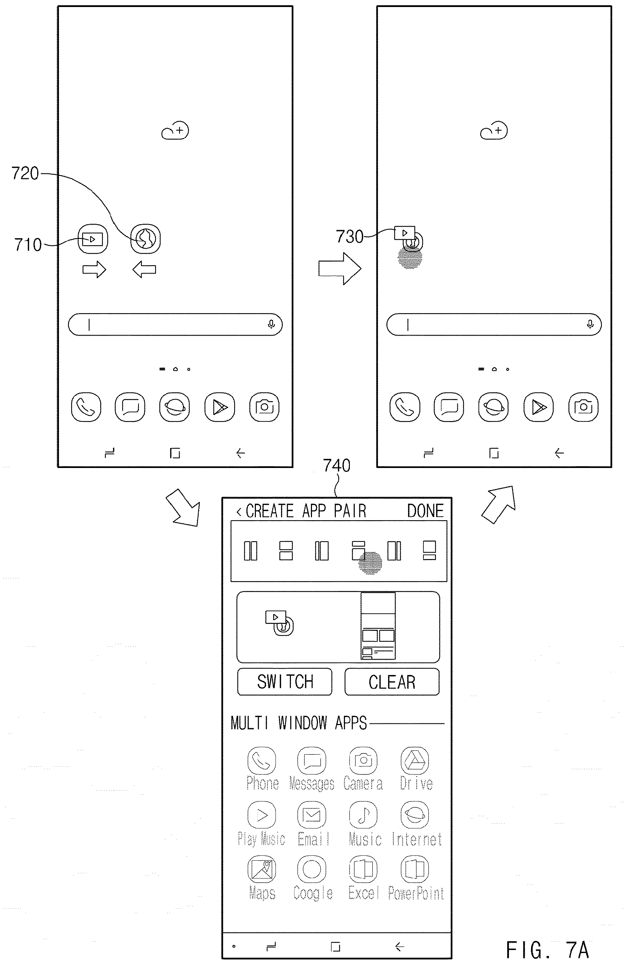

FIG. 7A is a diagram of a screen indicating creation of a multi-icon using a multi-touch, according to an embodiment.

Referring to FIG. 7A, when icons of applications are coupled to each other by the multi-touch of a user, a processor may create a multi-icon that allows applications respectively corresponding to icons to be executed in a multi-window scheme. When a first icon 710 and a second icon 720 are approached with each other at a distance satisfying the specified condition in a state where a user touches both the first icon 710 corresponding to a first application and the second icon 720 corresponding to a second application, the processor may create a multi-icon 730.

The processor may directly create the multi-icon 730 without any setting or may output a setting UI 740 to create the multi-icon 730 depending on a user input. The processor may store information about the placement order, lay-out, window sizes, or the like of applications to be executed, through the setting UI 735.

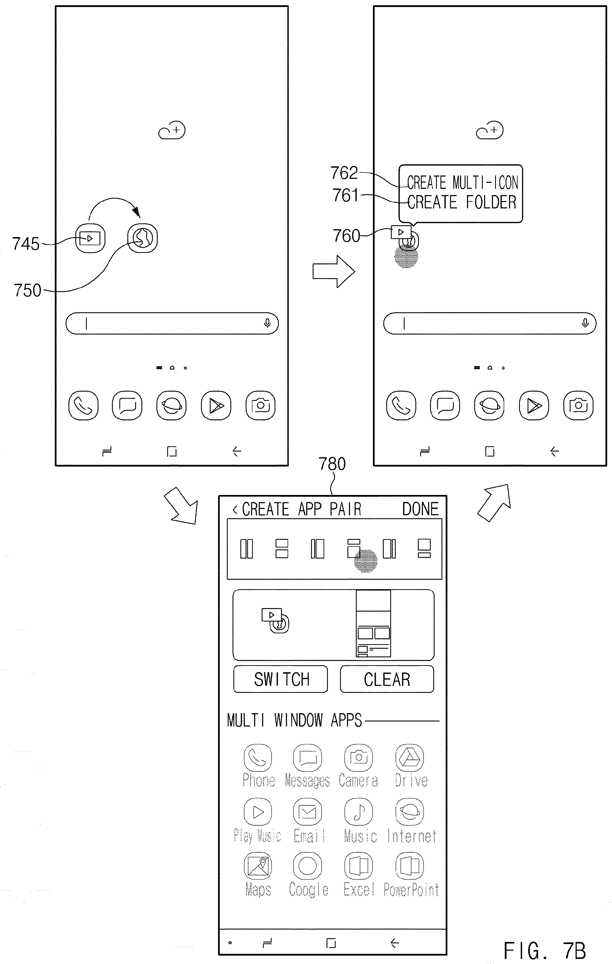

FIG. 7B is a diagram of a screen indicating creation of a multi-icon through movement of an icon, according to an embodiment.

Referring to FIG. 7B, when one icon is moved by a user input and then overlaps with an icon of another application, a processor may create a multi-icon that allows applications respectively corresponding to icons to be executed in a multi-window scheme. When a user touches and drags the first icon 740 corresponding to a first application, moves the first icon 745 so as to overlap with a second icon 750 corresponding to a second application, and terminates a touch input, the processor may output a menu 760 including a folder creation button 761 and/or a multi-icon creation button 762. When the user launches the multi-icon creation button 762, the processor may directly create a multi-icon without any setting or may output a setting UI 780 to create the multi-icon depending on a user input. The processor may store information about the placement order, lay-out, window sizes, or the like of applications to be executed, through the setting UI 780.

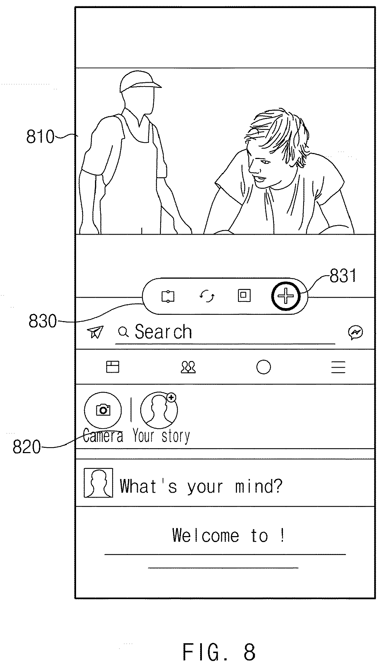

FIG. 8 is a diagram of a screen indicating creation of a multi-icon in a multi-window output, according to an embodiment.

Referring to FIG. 8, a processor may be in a state of executing a first application and a second application in a multi-window scheme. In a portrait mode, an execution window 810 of the first application may be disposed at the upper end of a display, and an execution window 820 of the second application may be disposed at the lower end of the display.

The processor may output a button area 830 associated with the execution of a multi-window, between the execution window 810 of the first application and the execution window 820 of the second application.

The button area 830 may include a multi-icon creation button 831 for creating a multi-icon for the first application and the second application. When a user touches the multi-icon creation button 831, the processor may create the multi-icon based on the form in which the first application and the second application are executed.

When the user touches the multi-icon creation button 831, the processor may store the size of the execution window 810 of the first application being output or the size of the execution window 820 of the second application being output and may create the multi-icon. When the user launches the created multi-icon, the processor may verify the stored sizes of the execution windows of the first application and the second application and may open the execution windows at the stored sizes.

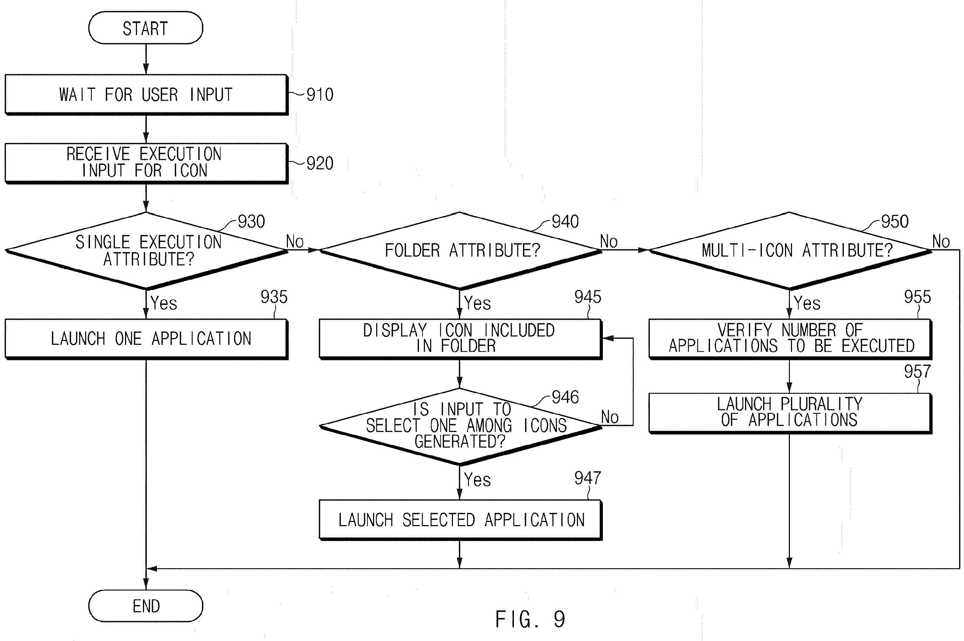

FIG. 9 is a flowchart of executing an application according to an attribute of an icon, according to an embodiment.

Referring to FIG. 9, at step 910, a processor inside an electronic device may be in a state of waiting for an input. The processor may be in a state in which power is supplied through an internal battery or an external device.

At step 920, the processor may receive the execution input for an icon displayed in a display. The processor may verify the attribute of the icon selected by the execution input. The attribute may be one of a single execution attribute, a folder attribute, and a multi-icon attribute.

At step 930 and step 935, when the selected icon has the single execution attribute, the processor may launch one application corresponding to the icon. The processor may generate or verify data associated with the execution of an application corresponding to the icon and may launch the selected application. The data may include screen area information and application information (e.g., package name) mapped to be displayed in the screen area information, as a structure that defines an area for executing an application and outputting the application to a screen.

At step 940 and step 945, when the selected icon has the folder attribute, the processor may display the icon included in a folder.

At step 946, the processor may determine whether a user input to select one among icons included in the folder is generated.

When the one icon among icons included in the folder is selected by the user input, at step 947, the processor may generate or verify data associated with the execution of an application and may launch the selected application.

At step 950 and step 955, when the selected icon has the multi-icon attribute, the processor may verify the number of applications to be executed and may generate or verify data associated with the executions of applications corresponding to the number.

At step 957, the processor may launch a plurality of applications based at least partly on data associated with the executions of applications. The processor may verify the execution ratio (e.g., window size) between applications and may adjust the execution window of each application.

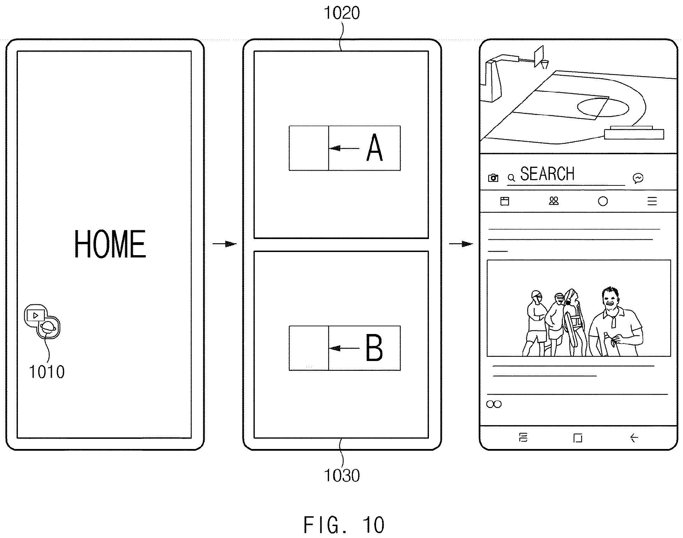

FIG. 10 is a diagram of an execution method of a multi-icon, according to various embodiments.

Referring to FIG. 10, when a selected icon 1010 has a multi-icon attribute, a processor may verify the number of applications to be executed and may generate screen areas 1020 and 1030 corresponding to the number.

The processor may launch applications A and B to be executed in a multi-window scheme, in the generated screen areas 1020 and 1030. The processor may, in parallel, proceed with the initialization procedure for driving applications A and B. The processor may verify the execution ratio (e.g., window size) between applications and may adjust the execution window of each application. When application A is a video application and outputs a video played at a ratio of 16:9, the processor 160 may maximize and launch application A at the upper end of a display at the ratio of 16:9 and may launch application B at the remaining area.

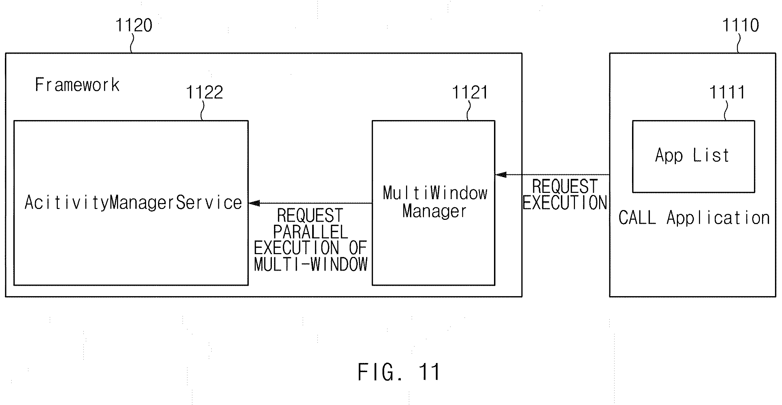

FIG. 11 is a diagram of a program module executing a multi-icon, according to an embodiment.

Referring to FIG. 11, a call application 1110 may include an application list 1111 of applications linked to each other so as to operate in a multi-window scheme. When an execution input of a multi-icon is generated, the call application 1110 may request a framework 1120 to execute the linked applications with reference to the application list 1111.

The framework 1120 may manage the life cycle of an application and may manage the operation of an overall platform. The framework 1120 may include a multi-window manager 1121 and an activity manager service 1122.

The multi-window manager 1121 may provide an API capable of executing the linked plurality of applications. The multi-window manager 1121 may prepare the execution of the linked plurality of applications and may process data necessary for the execution. The multi-window manager 1121 may transmit a request for executing, in parallel, the linked plurality of applications, to the activity manager service 1122.

The activity manager service 1122 may launch an application in a platform through the start of activity. The activity manager service 1122 may launch a plurality of applications continuously and in parallel, in response to a request for executing the plurality of applications, which is received from the multi-window manager 1121.

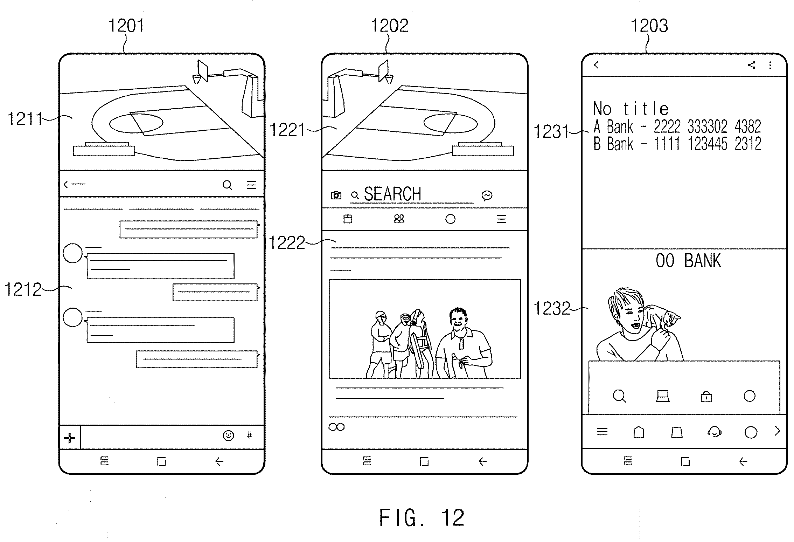

FIG. 12 is a diagram of execution of a multi-window in a portrait mode, according to an embodiment.

Referring to FIG. 12, an electronic device may operate in a portrait mode. When the electronic device operates in a multi-window scheme in the portrait mode, a plurality of applications may be displayed on screens vertically divided as many as the number of applications, respectively.

If a multi-icon is executed in the portrait mode, the processor may launch the linked plurality of applications on vertically divided screens, together. The processor may launch each application on the execution window of the set size.

In screen 1201, a video application 1211 and a message application 1212 may be launched in a multi-window scheme. While watching a video, a user may have a conversation with another user through a message.

When the size of a window in which an application is to be executed is set, the processor may launch at least one application (e.g., the video application 1211 and the message application 1212) depending on the set value.

When the size of a window is not set, the processor may determine the size of the window depending on the feature of an application to be executed, and then may launch the application. When the video application 1211 outputs an image to be played at a ratio of 16:9, the processor may maximize and launch the video application 1211 at the upper end of the display at the ratio of 16:9 and may launch the message application 1212 in the remaining area.

In screen 1202, a video application 1221 and an SNS application 1222 may be launched in the multi-window scheme. While watching a video, the user may upload images, texts, or the like by using the SNS application 1222.

In screen 1203, a memo application 1231 and a banking application 1232 may be launched in the multi-window scheme. While verifying the account number recorded in the memo application 1231, the user may transfer funds by using the banking application 1232. When the size of a window is not set, the processor may launch an application at the same size of the window.

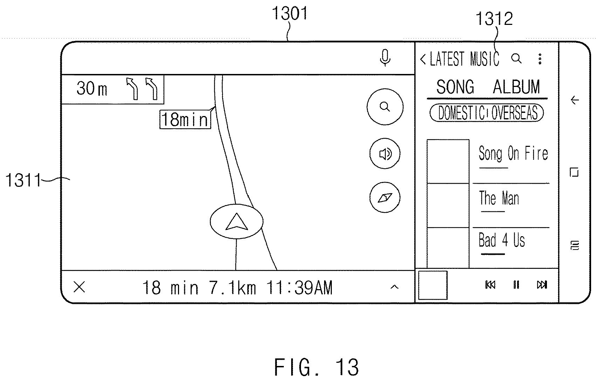

FIG. 13 is a diagram of execution of a multi-window in a landscape mode, according to an embodiment.

Referring to FIG. 13, an electronic device may operate in a landscape mode. When the electronic device operates in a multi-window scheme in the landscape mode, a plurality of applications may be displayed on screens horizontally divided as many as the number of applications, respectively.

If a multi-icon is executed in the landscape mode, the processor may launch the linked plurality of applications on horizontally divided screens, together. The processor may launch an application on the execution window of the set size.

In screen 1301, the processor may launch a navigation application 1311 and a music application 1312 in the multi-window scheme. While being guided through the navigation application 1311, a user may listen to the desired music through the music application 1312.

When the size of a window in which an application is to be executed is set, the processor may launch the navigation application 1311 and the music application 1312 depending on the set value.

When the size of a window is not set, the processor may determine the size of the window depending on the feature of an application to be executed, and then may launch the application. When the navigation application 1311 is launched at a ratio of 4:3, the processor may maximize and launch the navigation application 1311 at the left side of the display at the ratio of 4:3 and may launch the music application 1312 in the remaining area.

When the electronic device is connected to an external display device (e.g., a monitor) and then is used, the processor may execute a multi-icon by reflecting the screen ratio of an external display device, the feature of an application being executed, or the like. When the multi-icon is executed in a state where the electronic device is connected to an external monitor, the processor may switch the arrangement of a vertical direction to the arrangement of a horizontal direction to execute a multi-window.

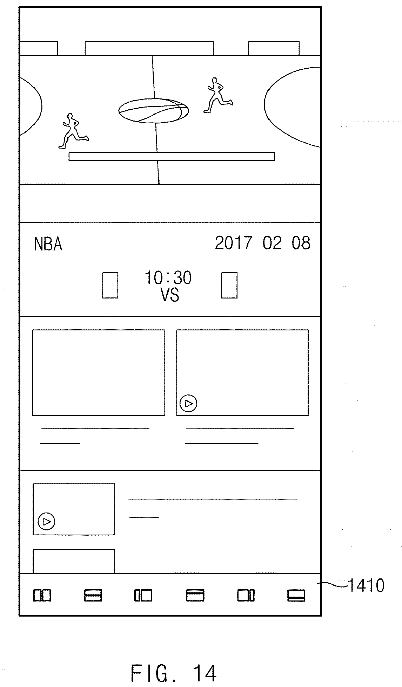

FIG. 14 is a diagram of a change in a layout during a multi-window operation, according to an embodiment.

Referring to FIG. 14, if a multi-icon is executed, a processor may launch the linked plurality of applications, together. The processor may launch each application on the execution window of the set size.

The processor may output a layout UI 1410 for changing the lay-out of a window in at least part of a screen for executing a plurality of applications, in a multi-window scheme.

The layout UI 1410 may include various layout images associated with the lay-out of the window of applications being executed. When one of layout images included in the layout UI 1410 is selected, the processor may change the lay-out of a plurality of applications being executed. When the lay-out of a plurality of applications is changed by an input, the processor may store the changed value in conjunction with the multi-icon.

According to an embodiment, an electronic device includes a display, a communication circuit, a processor electrically connected to the display and the communication circuit, and a memory electrically connected to the processor and configured to store a first application program including a first user interface and a second application program including a second user interface. The memory further stores instructions that, when executed, cause the processor to receive a gesture input moving toward a center of the display from an edge of the display, display an array of icons in an area adjacent to the edge in response to the gesture input, each of the icons having a first size, one of the icons including a first icon and a second icon, the first icon and second icon having a second size smaller than the first size, the first icon indicating the first application program, and the second icon indicating the second application program, receive an input to select the one of the icons, and display the first user interface and the second user interface together on the display in response to the received input.

According to an embodiment, the instructions, when executed, further cause the processor to display the first user interface and the second user interface so as to have the same size as each other.

According to an embodiment, the first user interface and the second user interface contact with each other along a boundary extending perpendicular to the edge.

According to an embodiment, the display is in a form of a rectangle having a first side with a first length and a second side with a second length longer than the first length, and the edge is at least part of the second side.

According to an embodiment, at least one icon of the array of icons includes a folder icon, and the folder icon includes a plurality of icons indicating a plurality of application programs.

According to an embodiment, the instructions, when executed, further cause the processor to output a user interface for creating at least one icon of the array of icons, and the user interface includes a preview area displaying a form of an icon to be created, and an application selection area including an icon of an application supporting a multi-window.

According to an embodiment, the user interface further includes a touch button for changing an order in which the first application program and the second application program are disposed on the display.

According to an embodiment, the user interface further includes a button for canceling selection of a selected application.

According to an embodiment, the instructions, when executed, further cause the processor to dim at least part of icons included in the application selection area.

According to an embodiment, the instructions, when executed, further cause the processor to dim an icon of a application program that does not support duplicate execution when the application program that does not support duplicate execution is selected by a user.

According to an embodiment, the instructions, when executed, further cause the processor to dim an icon of another application program having a history in which an icon is created in conjunction with a selected application program.

According to an embodiment, the user interface further includes a recommendation area for recommending another application program capable of being linked to a selected application program.

According to an embodiment, the instructions, when executed, further cause the processor to update the recommendation area based on information about link history of an application program stored in the memory or the link probability of an application program provided by an external device.

According to an embodiment, an electronic device includes a display, a memory, and a processor. The processor is configured to output a user interface for creating a shortcut icon for launching a plurality of applications in a multi-window scheme, and wherein the user interface includes a preview area and an application selection area.

According to an embodiment, the processor is further configured to when a user input in a specified scheme is generated to a first icon associated with execution of a first application, output the user interface.

According to an embodiment, the user input in the specified scheme is an input to select one of options generated after a long press input or a 3D pressure input is generated to the first icon.

According to an embodiment, the user input in the specified scheme is an input to select one option in a menu output in response to an input moving toward a center of the display from an edge of the display.

According to an embodiment, the processor is further configured to output the user interface when a multi-touch is generated to a first icon associated with execution of a first application and a second icon associated with execution of a second application and a user input to overlap with the first icon and the second icon is generated.

According to an embodiment, the user interface further includes a layout area for selecting a lay-out of selected applications.

According to an embodiment, an electronic device includes a display, a memory, and a processor. The processor is configured to execute a plurality of applications on the display in a multi-window scheme, and display a user interface for creating an icon for together launching the plurality of applications being executed, on the display.

According to an embodiment, the processor is configured to display a user interface for selecting a lay-out of the plurality of applications being executed, on the display.

According to an embodiment, an application executing method performed by an electronic device includes receiving a user input in a specified scheme to a first icon associated with execution of a first application, outputting a user interface for creating a shortcut icon that executes a plurality of applications including the first application in a multi-window scheme, and creating the shortcut icon.

According to various embodiments of the present disclosure, an electronic device and a method for operating applications may create an icon, which allows a plurality of applications to be executed in a multi-window scheme together (or in parallel) in response to one user input.

According to various embodiments of the present disclosure, an electronic device and a method for operating applications may allow a user to easily verify the applications to be executed together, in the multi-window scheme.

According to various embodiments of the present disclosure, an electron ic device and a method for operating applications may provide a user interface through which the user is capable of intuitively determining the lay-out of windows in which the applications are executed.

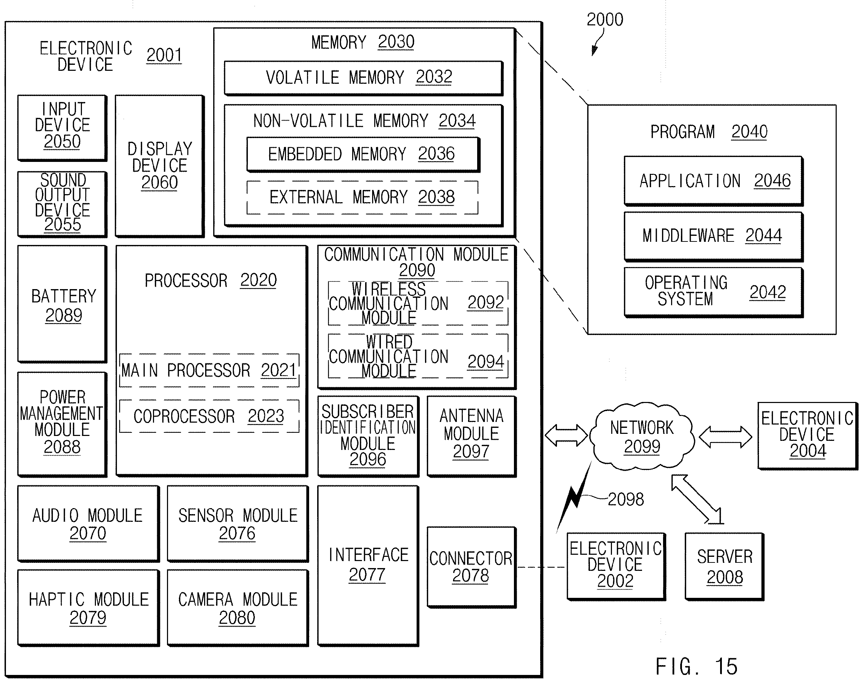

FIG. 15 is a diagram of an electronic device in a network environment, according to an embodiment.

Referring to FIG. 15, under the network environment 2000, the electronic device 2001 may communicate with an electronic device 2002 through local wireless communication 2098 or may communicate with an electronic device 2004 or a server 2008 through a network 2099. The electronic device 2001 may communicate with the electronic device 2004 through the server 2008.

The electronic device 2001 may include a processor 2020, a memory 2030, an input device 2050 (e.g., a micro-phone or a mouse), a sound output device 2055, a display device 2060, an audio module 2070, a sensor module 2076, an interface 2077, a haptic module 2079, a camera module 2080, a power management module 2088, a battery 2089, a communication module 2090, a subscriber identification module 2096, and an antenna module 2097. The electronic device 2001 may not include at least one of the above-described elements or may further include other element(s).

The processor 2020 may include one or more of a CPU, an AP, a graphic processing unit (GPU), an image signal processor (ISP) of a camera or a communication processor (CP). The processor 2020 may be implemented with a system on chip (SoC) or a system in package (SiP). The processor 2020 may drive an operating system (OS) or an application to control at least one of another element (e.g., hardware or software element) connected to the processor 2020 and may process and compute various data. The processor 2020 may load a command or data, which is received from at least one of other elements, into a volatile memory 2032 to process the command or data and may store the resulting data into a nonvolatile memory 2034. The processor 2020 may include a main processor 2021 and a coprocessor 2023.

The memory 2030 may include the volatile memory 2032 or the nonvolatile memory 2034. The volatile memory 2032 may include a random access memory (RAM) (e.g., a dynamic RAM (DRAM), a static RAM (SRAM), or a synchronous DRAM (SDRAM)). The nonvolatile memory 2034 may include an one time programmable read-only memory (OTPROM), a programmable read-only memory (PROM),an erasable PROM (EPROM), an electrically EPROM (EEPROM), a mask ROM, a flash ROM, a flash memory, a hard disk drive (HDD), or a solid-state drive (SSD). In addition, the nonvolatile memory 2034 may be configured in the form of an embedded memory 2036 or the form of an external memory 2038 which is available through connection only if necessary, according to the connection with the electronic device 2001. The external memory 2038 may further include a flash drive such as compact flash (CF), secure digital (SD), micro secure digital (Micro-SD), mini secure digital (Mini-SD), extreme digital (xD), a multimedia card (MMC), or a memory stick. The external memory 2038 may be operatively or physically connected with the electronic device 2001 in a wired manner (e.g., a cable or a universal serial bus (USB)) or a wireless (e.g., Bluetooth) manner.

The memory 2030 may store at least one different software element, such as a command or data associated with the program 2040 of the electronic device 2001. The program 2040 may include a operating system 2042, a middleware 2044, or an application 2046.

The input device 2050 may include a microphone, a mouse, or a keyboard. The keyboard may include a keyboard physically connected or a virtual keyboard displayed through the display device 2060.

The display device 2060 may include a display, a hologram device or a projector, and a control circuit to control a relevant device. The display may include an LCD, an LED display, an OLED display, a MEMS display, or an electronic paper display. The display may be flexibly, transparently, or wearably implemented. The display may include a touch circuitry, which is able to detect a user's input such as a gesture input, a proximity input, or a hovering input or a pressure sensor (or force sensor) which is able to measure the intensity of the pressure by the touch. The touch circuit or the pressure sensor may be implemented integrally with the display or may be implemented with at least one sensor separately from the display. The hologram device may show a stereoscopic image in a space using interference of light. The projector may project light onto a screen to display an image. The screen may be located inside or outside the electronic device 2001.

The audio module 2070 may convert from a sound into an electrical signal or from an electrical signal into the sound. The audio module 2070 may acquire sound through the input device 2050 (e.g., a microphone) or may output sound through an output device (e.g., a speaker or a receiver) included in the electronic device 2001, an external electronic device or an electronic device (e.g., a wired speaker or a wired headphone) connected with the electronic device 2001

The sensor module 2076 may measure or detect an internal operating state (e.g., power or temperature) of the electronic device 2001 or an external environment state (e.g., an altitude, a humidity, or brightness) to generate an electrical signal or a data value corresponding to the information of the measured state or the detected state. The sensor module 2076 may include at least one of a gesture sensor, a gyro sensor, a barometric pressure sensor, a magnetic sensor, an acceleration sensor, a grip sensor, a proximity sensor, a color sensor (e.g., a red, green, blue (RGB) sensor), an infrared sensor, a biometric sensor (e.g., an iris sensor, a fingerprint senor, a heartbeat rate monitoring (HRM) sensor, an e-nose sensor, an electromyography (EMG) sensor, an electroencephalogram (EEG) sensor, an electrocardiogram (ECG) sensor), a temperature sensor, a humidity sensor, an illuminance sensor, or an UV sensor. The sensor module 2076 may further include a control circuit for controlling at least one or more sensors included therein. The sensor module 2076 may be controlled by using the processor 2020 or a processor (e.g., a sensor hub) separate from the processor 2020. When the separate processor (e.g., a sensor hub) is used, while the processor 2020 is in a sleep state, the separate processor may operate without awakening the processor 2020 to control at least a portion of the operation or the state of the sensor module 2076.

The interface 2077 may include a high definition multimedia interface (HDMI), a USB, an optical interface, a recommended standard 232 (RS-232), a D-subminiature (D-sub), a mobile high-definition link (MHL) interface, a SD card/MMC (multi-media card) interface, or an audio interface.

A connector 2078 may physically connect the electronic device 2001 and the electronic device 2006. The connector 2078 may include a USB connector, an SD card/MMC connector, or an audio connector (e.g., a headphone connector).

The haptic module 2079 may convert an electrical signal into mechanical stimulation (e.g., vibration or motion) or into electrical stimulation. The haptic module 2079 may apply tactile or kinesthetic stimulation to a user. The haptic module 2079 may include a motor, a piezoelectric element, or an electric stimulator.

The camera module 2080 may capture a still image and a moving picture. The camera module 2080 may include at least one lens (e.g., a wide-angle lens and a telephoto lens, or a front lens and a rear lens), an image sensor, an image signal processor, or a flash (e.g., a light emitting diode or a xenon lamp).

The power management module 2088, which is to manage the power of the electronic device 2001, may constitute at least a portion of a power management integrated circuit (PMIC).

The battery 2089 may include a primary cell, a secondary cell, or a fuel cell and may be recharged by an external power source to supply power at least one element of the electronic device 2001.

The communication module 2090 may establish a communication channel between the electronic device 2001 and an external device (e.g., the first external electronic device 2002, the second external electronic device 2004, or the server 2008). The communication module 2090 may support wired communication or wireless communication through the established communication channel. The communication module 2090 may include a wireless communication module 2092 or a wired communication module 2094. The communication module 2090 may communicate with the external device (e.g., the first external electronic device 2002, the second external electronic device 2004, or the server 2008) through a first network 2098 (e.g. a wireless local area network such as Bluetooth or Infrared Data Association (IrDA)) or a second network 2099 (e.g., a wireless wide area network such as a cellular network) through a relevant module among the wireless communication module 2092 or the wired communication module 2094.

The wireless communication module 2092 may support cellular communication, local wireless communication, and global navigation satellite system (GNSS) communication. The cellular communication may include long-term evolution (LTE), LTE Advance (LTE-A), code division multiple access (CDMA), wideband CDMA (WCDMA), universal mobile telecommunications system (UMTS), wireless broadband (WiBro), or global system for mobile communications (GSM). The local wireless communication may include wireless fidelity (Wi-Fi), WiFi Direct, light fidelity (Li-Fi), Bluetooth, Bluetooth low energy (BLE), Zigbee, near field communication (NFC), magnetic secure transmission (MST), radio frequency (RF), or a body area network (BAN). The GNSS may include at least one of a global positioning system (GPS), a global navigation satellite system (Glonass), Beidou navigation satellite system (Beidou), the European global satellite-based navigation system (Galileo), or the like. "GPS" and "GNSS" may be interchangeably used.

When the wireless communication module 2092 supports cellar communication, the wireless communication module 2092 may identify or authenticate the electronic device 2001 within a communication network using the subscriber identification module (e.g., a SIM card) 2096. The wireless communication module 2092 may include a CP separate from the processor 2020 (e.g., an AP). The CP may perform at least a portion of functions associated with at least one of elements 2020 to 2096 of the electronic device 2001 in substitute for the processor 2020 when the processor 2020 is in an inactive (sleep) state, and together with the processor 2020 when the processor 2020 is in an active state. The wireless communication module 2092 may include a plurality of communication modules, each supporting only a relevant communication scheme among cellular communication, local wireless communication, or a GNSS communication.

The wired communication module 2094 may include include a local area network (LAN) service, a power line communication, or a plain old telephone service (POTS).

Tthe first network 2098 may employ WiFi direct or Bluetooth for transmitting or receiving commands or data through wireless direct connection between the electronic device 2001 and the first external electronic device 2002. The second network 2099 may include a telecommunication network (e.g., a computer network such as a LAN or a WAN, the Internet or a telephone network) for transmitting or receiving commands or data between the electronic device 2001 and the second external electronic device 2004.

The commands or the data may be transmitted or received between the electronic device 2001 and the second external electronic device 2004 through the server 2008 connected with the second network 2099. Each of the first and second external electronic devices 2002 and 2004 may be a device of which the type is different from or the same as that of the electronic device 2001. All or a part of operations that the electronic device 2001 will perform may be executed by another or a plurality of electronic devices. When the electronic device 2001 executes any function or service automatically or in response to a request, the electronic device 2001 may not perform the function or the service internally, but may alternatively or additionally transmit requests for at least a part of a function associated with the electronic device 2001 to any other device. The other electronic device may execute the requested function or additional function and may transmit the execution result to the electronic device 2001. The electronic device 2001 may provide the requested function or service using the received result or may additionally process the received result to provide the requested function or service. To this end cloud computing, distributed computing, or client-server computing may be used.

The term "module" used herein may represent, for example, a unit including one or more combinations of hardware, software and firmware. The term "module" may be interchangeably used with the terms "logic", "logical block", "part" and "circuit". The "module" may be a minimum unit of an integrated part or may be a part thereof. The "module" may be a minimum unit for performing one or more functions or a part thereof. For example, the "module" may include an ASIC.

Various embodiments of the present disclosure may be implemented by software including an instruction stored in a machine-readable storage media readable by a machine (e.g., a computer). The machine may be a device that calls the instruction from the machine-readable storage media and operates depending on the called instruction and may include the electronic device. When the instruction is executed by the processor, the processor may perform a function corresponding to the instruction directly or using other components under the control of the processor. The instruction may include a code generated or executed by a compiler or an interpreter. The machine-readable storage media may be provided in the form of non-transitory storage media. Here, the term "non-transitory", as used herein, is a limitation of the medium itself (i.e., tangible, not a signal) as opposed to a limitation on data storage persistency.

According to an embodiment, the method according to various embodiments disclosed in the present disclosure may be provided as a part of a computer program product. The computer program product may be traded between a seller and a buyer as a product. The computer program product may be distributed in the form of machine-readable storage medium (e.g., a compact disc read only memory (CD-ROM)) or may be distributed only through an application store (e.g., a Play Store™). In the case of online distribution, at least a portion of the computer program product may be temporarily stored or generated in a storage medium such as a memory of a manufacturer's server, an application store's server, or a relay server.

Each component (e.g., the module or the program) according to various embodiments may include at least one of the above components, and a portion of the above sub-components may be omitted, or additional other sub-components may be further included. Alternatively or additionally, some components may be integrated in one component and may perform the same or similar functions performed by each corresponding components prior to the integration. Operations performed by a module, a programming, or other components according to various embodiments of the present disclosure may be executed sequentially, in parallel, repeatedly, or in a heuristic method. Also, at least some operations may be executed in different sequences, omitted, or other operations may be added.

While the disclosure has been shown and described with reference to certain embodiments thereof, it will be understood by those skilled in the art that various changes in form and details may be made therein without departing from the scope of the disclosure. Therefore, the scope of the disclosure should not be defined as being limited to the embodiments, but should be defined by the appended claims and equivalents thereof.

The above embodiments of the present disclosure are illustrative and not limitative. Various alternatives and equivalents are possible. Other additions, subtractions, or modifications are obvious in view of the present disclosure and are intended to fall within the scope of the appended claims.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. An electronic device comprising:
a display;
a communication circuit;
a processor electrically connected to the display and the communication circuit; and
a memory electrically connected to the processor, wherein the memory is configured to store a first application program including a first user interface and a second application program including a second user interface,
wherein the memory further stores instructions that, when executed, cause the processor to:
receive a gesture input moving toward a center of the display from an edge of the display;
display an array of icons in an area adjacent to the edge in response to the gesture input, wherein each of the icons has a first size, one of the icons includes a first icon and a second icon, the first icon and second icon having a second size smaller than the first size, the first icon indicates the first application program, and the second icon indicates the second application program;
receive an input to select the one of the icons; and
display the first user interface and the second user interface together on the display in response to the received input.

2. The electronic device of claim 1, wherein the instructions, when executed, further cause the processor to:
display the first user interface and the second user interface so as to have the same size as each other.

3. The electronic device of claim 2, wherein the first user interface and the second user interface contact with each other along a boundary extending perpendicular to the edge.

4. The electronic device of claim 3, wherein the display is in a form of a rectangle having a first side with a first length and a second side with a second length longer than the first length, and
wherein the edge is at least part of the second side.

5. The electronic device of claim 1, wherein at least one icon of the array of icons includes a folder icon, and
wherein the folder icon includes a plurality of icons indicating a plurality of application programs.

6. The electronic device of claim 1, wherein the instructions, when executed, further cause the processor to:
output a user interface for creating at least one icon of the array of icons, and
wherein the user interface includes a preview area displaying a form of an icon to be created, and an application selection area including an icon of an application supporting a multi-window.

7. The electronic device of claim 6, wherein the user interface further includes a touch button for changing an order in which the first application program and the second application program are disposed on the display.

8. The electronic device of claim 6, wherein the user interface further includes a button for canceling selection of a selected application.

9. The electronic device of claim 6, wherein the instructions, when executed, further cause the processor to:
dim at least part of icons included in the application selection area.

10. The electronic device of claim 9, wherein the instructions, when executed, further cause the processor to:
dim an icon of the application program when an application program that does not support duplicate execution is selected by a user.

11. The electronic device of claim 9, wherein the instructions, when executed, further cause the processor to:
dim an icon of another application program having a history in which an icon is created in conjunction with a selected application program.

12. The electronic device of claim 6, wherein the user interface further includes a recommendation area for recommending another application program capable of being linked to a selected application program.

13. The electronic device of claim 12, wherein the instructions, when executed, further cause the processor to:
update the recommendation area based on information about link history of an application program stored in the memory or the link probability of an application program provided by an external device.

14. An electronic device comprising:
a display;
a memory; and
a processor,
wherein the processor is configured to:
output a user interface for creating a shortcut icon for launching a plurality of applications in a multi-window scheme,
wherein the user interface includes a preview area and an application selection area.

15. An application executing method performed by an electronic device, the method comprising:
receiving a user input in a specified scheme to a first icon associated with execution of a first application;
outputting a user interface for creating a shortcut icon that executes a plurality of applications including the first application in a multi-window scheme; and
creating the shortcut icon.
